# EUROPEAN PATENT APPLICATION

(11) **EP 2 712 897 A1**
(43) Date of publication of application: **02.04.2014**
(21) Application number: 12186761.8
(22) Date of filing: 01.10.2012
(51) Int. Cl.: C09D 5/14, C09D 5/16, C09D 7/00, C09D 7/12, A01N 25/26

(54) **Improved Insecticidal Paints**

(71) Applicant: Akzo Nobel Coatings International B.V., 6824 BM Arnhem (NL)
(72) Inventor: Horley, Sue, Slough, Berkshire SL2 5DS (GB); McLoughlin, Daragh, 201600 Shanghai (CN); Kang, Kai, 201600 Shanghai (CN); Wang, Linling, 201600 Shanghai (CN)
(74) Representative: Akzo Nobel IP Department

(57) **Abstract**

An aqueous insecticidal architectural coating composition comprising,
i. a polymer binder comprising emulsion polymer particles having a Tg above ambient temperature
ii. an effective amount of coalescing solvent for the polymer particles
iii. an effective amount of volatile insecticide
wherein the insecticide has a vapour pressure measured at 25°C of at least 0.1mPa and is located in the polymer particles.

## Description

The present invention is concerned with aqueous, insecticidal architectural paints, especially those containing volatile insecticides; and to a method of producing them.

Architectural paints containing insecticides used to coat walls, floors and ceilings inside buildings are known. Such insecticidal paints kill insects usually by contact. Many of the known paints are solventborne, that is to say, the majority, if not all of the carrier liquid is organic solvent. This is largely because insecticides are large organic molecules that do not readily dissolve in aqueous paints, particularly at the low VOC (volatile organic content) level demanded by legislation and consumers throughout the world.

The Weatherall Company Inc discloses a dispersion (known as BugJuice®) containing 4.75% of the insecticide Deltamethrin on its webpage www.weatherall.com/1053BugJuice.html,. The dispersion can be added to any oil or latex based paint. However, once added, the paint must be used within three hours otherwise the insecticide becomes ineffective. Of necessity therefore, this is a two pack system. So, not only is the dispersion inconvenient to use but the paint must be used within a short time or be disposed of. Furthermore, users of architectural paints prefer not to have to mix in additives to a paint as it is often difficult to achieve a homogenous mixture. This is particularly so when adding materials to thixotropic latex paints as it requires the user to break down the thixotropy first by vigorous stirring and after adding the material, wait for the thixotropy to build-up again in order to achieve the correct rheology characteristics so that the paint may be applied to achieve the best finish. In addition the process of making the insecticide dispersion is complicated and the dispersion itself will contain surfactants that can degrade the film properties of the dried paint coating such as water resistance. A one pack composition, where the insecticide is incorporated into the paint during manufacture and is stable for many months, is therefore, desirable.

Furthermore, we have found that some insecticides are hydrolytically unstable and become ineffective against insects in aqueous media after a very short time.

One pack insecticidal paints are known. Such paints are disclosed in WO2006/070183 and comprise insecticide encapsulated by thin layers of crosslinked polymer. The capsules are formed from highly crosslinked polyurea or crosslinked aminoplast resins and require complex and expensive processes to produce. Such crosslinked polymers do not film form at ambient temperatures.

For convenience, the term polymer is used in this specification to include homopolymers and copolymers.

Thus, there is a need for a simple composition and process that provides a one pack ready for use insecticidal architectural paint composition that can be stored for extended periods of up to 12 months.

Our copending application, PCT/CN2011/08157 provides a coating composition that overcomes the problems outlined above, the contents of which are hereby incorporated by reference.

We have now discovered that certain insecticides remain in the dried paint film for only a short time, sometimes a matter of only a few days, resulting in dried paint films which contains no insecticide, or at least so little that it is less than the minimum effective amount necessary to kill all or even some of the insects. We have found that the insecticides which are susceptible to leaving the dried film in this way are volatile. Interior architectural paint is normally expected to last many months and possibly a year or more. Naturally, consumers expect that the insecticidal activity of an insecticidal paint will also last a similar length of time. Thus, there is a major problem waiting to be solved. The present invention provides a solution to the problem.

We have now found a way of making low VOC aqueous insecticidal architectural paints, comprising volatile insecticides, by a simple method and without the need of insecticide encapsulated in crosslinked polymer.

Accordingly, the present invention provides an aqueous insecticidal architectural coating composition comprising,
i. a polymer binder comprising emulsion polymer particles having a Tg above ambient temperature
ii. an effective amount of coalescing solvent for the polymer particles
iii. an effective amount of volatile insecticide
wherein the insecticide has a vapour pressure measured at 25°C of at least 0.1mPa and is located in the polymer particles.

The ambient temperature is the temperature that the dried paint experiences in use once applied to a surface, typically a wall. Such temperatures can be quite high as the regions of the world where insects are pests and a potential health hazard tend to have hot climates. Of course, ambient temperatures vary, but for the purposes of this specification we include temperatures from 5 to 50°C, preferably from 10 to 45°C, more preferably from 15 to 45°C, yet more preferably from 25 to 45 °C and most preferably from 30 to 45°C.

The notation Tg denotes the measured glass transition temperature of the polymer binder. Measurements were made using a Differential Scanning Calorimeter by the method hereinbelow described.

By emulsion polymer particles is meant that the particles are provided in the form of an aqueous dispersion or emulsion. The mean size of the particles is preferably up to 10µm, more preferably from 0.01 to 5.0 µm, even more preferably from 0.05 to 2.5 µm, still more preferably from 0.05 to 1.0 µm and most preferably from 0.05 to 0.5 µm.

Preferably the polymer binder has a Tg of at least 30°C, more preferably at least 35°C, even more preferably from 35 to 100°C, still more preferably from 35 to 80°C, yet more preferably from 35 to 70°C and most preferably from 35 to 60°C.

The polymer particles are preferably non-crosslinked as cross-linked particles tend to be poor film formers even in the presence of coalescing solvent.

Useful polymer particles include the acrylics, styrene-acrylics, vinyls including vinyl acetates, vinyl acetate-ethylene copolymers and polyurethanes. The polymer particles may be made by any known emulsion polymerisation methods including mini-emulsion techniques, conventional emulsion polymerisation methods. The particles may have core-shell architecture where the composition of the core differs from the shell or have a uniform composition throughout.

Preferably the polymer particles containing the insecticide comprise at least 60wt% of the film forming resin, more preferably 75wt%, even more preferably at least 90wt% and most preferably all of the film forming resin. This is preferred as it provides a more even distribution of the insecticide in the paint.

Coalescing solvents are generally solvents that plasticise the polymer, thereby reducing its effective Tg enabling the otherwise high Tg non-film-forming polymer to film-form at ambient temperatures.

By effective amount is meant that the coalescing solvent is present in sufficient quantity that the polymer particles are capable of forming a film at the chosen ambient temperature. Whilst not wishing to be bound by this, we think that for polymer particles of the invention to film form at temperatures below the Tg of the polymer, it is necessary that the coalescing solvent plasticises at least the outer region of the polymer particles. It is not necessary for the whole particle to be plasticised.

Preferably the particles film form, in the presence of coalescing solvents, at ambient temperatures from -15 to 50°C, more preferably from -10 to 45°C, even more preferably from 0 to 40°C and most preferably from 0 to 30°C.

Clearly, in situations where external heat may be applied to the coated surface, the coating temperature may be raised above the Tg of the polymer binder (for example by using IR radiant heaters), and consequently, coalescing solvent is not necessary. However, in the case of architectural coating compositions, it is not normally feasible or economically viable to use such heating.

Suitable coalescing solvents include Dowanol PM, DPM, TPM, PnP, DPnP, PnB, DpnB, TpnB, PMA, DPMA, PGDA, PPH, DMM, EPH; Dalpad C and D; butyl cellosolve acetate, butyl carbitol acetate, butyl triglycol, propyl cellosolve, hexyl cellosolve, n-butyl propionate, Coasol, Coasol 280, Dibutyl esters and Texanol. Preferably the solvent is selected from the dibasic ester solvents and Texanol, More preferably, the coalescing solvent comprises dibasic ester and most preferably the coalescing solvent consists of dibasic ester.

Preferably dibasic ester is used to dissolve the insecticide to form a solution which is then added to a part finished or finished paint and stirred at high shear.

Without wishing to be bound by this, it is thought that following addition of the insecticide solution the insecticide, and probably the dibasic ester, migrates to the polymer particles, where, isolated from the aqueous phase, the insecticide does not suffer hydrolysis.

The dibasic ester solvents comprise di-esters of succinic, glutaric and adipic acids. Readily available diesters include the methyl esters and iso-butyl esters. The di-methyl esters are preferred because they have reduced odour and are thus more pleasant to use, especially in confined and/or poorly ventilated spaces.

The di-basic ester solvents are available as single di-basic esters, for example di-methyl glutarate or as mixtures, for example consisting of the succinate, glutarate and the adipate esters. Where the di-basic ester solvent is a mixture of the esters, it is preferred that the mixture comprises at least 50 to 70wt%, more preferably 55 to 65wt% of the glutarate, more preferably the dimethy glutarate.

Preferably the dibasic esters are methyl esters; more preferably they are mixtures of dimethyl succinate, dimethyl glutarate and dimethyl adipate.

Di-methyl esters of succinic, glutaric and adipic acid solvents are available singly or as mixtures from Cytec under the trademark Santosol®.

Di-isobutyl esters of succinic, glutaric and adipic acid are available as a mixture (15 to 25%, 55 to 65% and 10 to 25% by weight respectively) from Dow under the trademark Coasol®. The di-isobutyl esters, such as Coasol®, are preferred as they have a boiling range of from 274 to 289°C which is above the 250°C upper limit that in some jurisdictions means they are not volatile organic compounds.

Preferably the effective amount of coalescing solvent is less than 7.5% based on the total weight of the liquid coating composition, more preferably from 0.05 to 7.5%, even more preferably from 0.25 to 5% and most preferably from 0.5 to 3%.

The coalescing solvent may be volatile or non-volatile. In territories where low VOC is required it is preferred that the coalescing solvent is non-volatile. In other regions where insecticidal activity is more important it is preferable that the coalescing solvent leaves the dried paint film Suitable examples of volatile insecticides for use in the present invention include propoxur, having a vapour pressure at 25°C of 1.3 mPa and chlorpyrifos, having a vapour pressure at 25°C of 1.43 mPa; bendiocarb, having a vapour pressure at 25°C of 4.6 mPa.

In contrast, non-volatile insecticides include Cyfluthrin, having a vapour pressure at 25°C of 3.0x10⁻⁴ mPa; Etofenprox having a vapour pressure at 25°C of 8.13 x10⁻⁴ mPa; Chlorfenapyr having a vapour pressure at 25°C of 9.81x10⁻³ mPa and Bifenthrin, having a vapour pressure at 25°C of 1.78a10⁻² mPa;

Vapour pressure may be measured using ASTM E1194-07 test method the details of which may be found at http://www.astm.org/Standards/E1194.htm

By effective amount of insecticide is meant an amount that kills the insects following contact with the dried coating composition. The effective amount of insecticide varies according to the insecticide. Preferably, from 0.1 to 4.0wt% based on the liquid coating composition is sufficient, more preferably from 1.0 to 3.25wt% and most preferably from 1.2 to 2.5wt%. The minimum amount is generally preferred as insecticides can be irritant to humans, especially children and are also costly.

In another aspect of the invention there is provided a process of making the coating composition of the invention comprising the steps of

A process of making an aqueous insecticidal architectural coating composition comprising the steps of
i. making a solution of volatile insecticide of at least 30wt% by dissolving the insecticide in a coalescing solvent, preferably dibasic ester solvent
ii. adding a sufficient amount of the solution to provide from 0.1 to 4.0wt% of the insecticide to a paint, calculated on the liquid paint formulation, comprising a polymer binder comprising emulsion polymer particles
iii. stirring the resultant mixture for a sufficient time to allow the insecticide to migrate into the polymer particles
wherein the insecticide has a vapour pressure measured at 25°C of at least 0.1 mPa and the measured Tg of the emulsion polymer particles is above ambient temperature.
In another aspect of the invention there is provided a process for coating a surface comprising the steps of
a. providing an aqueous insecticidal architectural coating composition comprising,
   i. a polymer binder comprising emulsion polymer particles having a Tg above ambient temperature
   ii. an effective amount of coalescing solvent for the polymer particles
   iii. an effective amount of volatile insecticide having a vapour pressure of at least 0.1mPa when measured at 25°C where said insecticide is located in the polymer particles b. applying the coating composition to a surface at a temperature below the Tg of the polymer particles
   c. allowing the coating composition to dry and form a continuous coating.

Preferably, the surface is any surface found inside a domestic or commercial building, including a wall, ceiling, floor or door.

### The invention will now be illustrated by the following examples

### The following materials were used in the examples

Collins DBE is a dibasic ester solvent and is a mixture of 15-25% dimethyl succinate, 55-65% dimethyl glutarate and 10-20% dimethyl adipate available from Shanghai Collins Chemical Company through their agent Gaoxinsh at http://www.gaoxinsh.com.

Chlorpyriphos is a volatile insecticide.

### Bifenthrin is a non-volatile insecticide.

Maxilite is a matt paint available from AkzoNobel, based on styrene-acrylic polymer binder, pH of 8.56, solids content is 48wt% , PVC is 80.0%, contains 2.24% of titanium dioxide, 44.54 wt% pigment, The Tg of the binder polymer is 35°C

Bindoplast is a matt paint available from AkzoNobel, based on a vinyl acetate-ethylene polymer binder, pH of 7.99, solids content is 54.2 wt%, the pigment volume content (PVC) is 62.8%, contains 7.8wt % of titanium dioxide and 43.7wt% pigment. The Tg of the binder polymer is 12°C.

### Tg measurement

The glass transition temperature, Tg, of the polymer binders were measured using a TA Instruments Differential Scanning Calorimeter (model number TA Q20) in a 'heat - cool - reheat' cycle ramping at 10°C/minute up to 100°C.

### WHO bioassay test

For this test two plastic cones were placed over the paint film and 10 non-blood-fed 2 to 5 day old female mosquitoes (Kisumu strain; Anopheles Gambiae) were introduced into each of the cones and exposed for 3 minutes, before removal, in a 150ml plastic cup provided with sucrose solution. After 24 hours the number of dead mosquitoes was recorded and expressed as a percentage of the total.

### Insecticide solution A

A solution of insecticide was prepared by dissolving 5 grams of Chlorpiryphos in 5g of Collins dibutyl ester solvent, DBE, in a 40ml glass container, whilst stirring at ambient temperature. Stirring continued for a further 5 minutes or until the insecticide dissolved, producing a 50wt% solids solution of Chlorpyriphos.

### Insecticide solution B

The same procedure was followed as used for Insecticide solution A except that the insecticide was Bifenthrin.

### Paint 1.

To a 200ml plastic container fitted with a Heidolph RZR 2041 paddle stirrer was added 97g of Bindoplast paint; to this was added 1.9796g of the insecticide solution A whilst stirring at 1000rpm for 30 minutes.

### Paint 2

The procedure used in Paint 1 was followed except that Maxilite paint was used.

### Paint 3

The procedure used in Paint 1 was followed except that a paint based on Tg 53°C polymer binder was used.

### Paint 4

A further paint was made using the same procedure as used in Paint 1 except that Insecticide solution B was used.

### Paint 5

The procedure used in Paint 4 was used except that Maxilite paint was used

### Paint Testing

Paint films were prepared on black Lenata panels using a 200 micron spreader. The films were allowed to air dry at ambient temperature and humidity.

### Testing of dried paint films

Each dried paint was assayed to determine the amount of insecticide remaining following storage at 25°C and, separately, at 50°C. Measurements were taken at 0 days, 30 days and 90 days

The paint films werer then tested according to WHO Cone Bioassay testing protocol to determine the mortality rate of the mosquitoes (expressed as a percentage of mosquitoes exposed.

### The results are shown in Table 1

**Table 1**

| | | Insecticide remaining as % of total added in paint film / (mosquito mortality rate as%) | | | | | | |
|---|---|---|---|---|---|---|---|---|
| | | 25°C | | | 50°C | | | |
| Paint | Insecticide | 0 days | 30 days | 90 days | 0 days | 30 days | 90 days | Binder Tg/°C |
| 1 | Chlorpyriphos | 100/(100) | 77/(38) | 38/(NA) | 100/(100) | 8/(3) | 4/(NA) | 12 |
| 2 | Chlorpyriphos | 100/(100) | 99/(100) | 98/(NA) | 100/(NA) | 4/(NA) | 4/(NA) | 35 |
| 3 | Chlorpyriphos | 100/(NA) | 90/(NA) | *80/(NA) | 100/(NA) | 78/(NA) | *80/(NA) | 53 |
| 4 | Bifenthrin | 100/(100) | 99/(100) | 99/(100) | 100/(100) | 79/(100) | 77/(100) | 12 |
| 5 | Bifenthrin | 100/(100) | 100/(100) | 97/(100) | 100/(100) | 99/(100) | 98/(100) | 35 |

| | | | | | | | | |
|---|---|---|---|---|---|---|---|---|
| *60 day data | | | | | | | | |

As can be seen, the Chlorpyriphos in the dried paint film of Paint 1 begins to escape the film after a few days with only 38% of the original amount remaining after 90 days. After 90 days at 50°C even less Chlorpyriphos is detectable with only 4% of the original amount added being detectable in the paint film. The effectiveness of the paint in killing mosquitoes is also significantly reduced as the amount remaining in the film decreases. Increasing the Tg of the polymer binder from 12°C to 35°C (Paint 2) and then to 53°C (Paint 3) increases the retention of the insecticide. This is especially marked at 50°C.

In contrast, dried paint films derived from paints containing Bifenthrin (Paints 4 and 5), an insecticide which is not volatile, lose the insecticide at very similar rates at 25°C, that being hardly at all even after 90 days. Insecticide is lost at a higher rate at 50°C although this is still a much lower rate compared to Paints 1 and 2. Again, the mortality of the mosquitoes follows the amount of insecticide left in the dried paint film.

## Claims

1. An aqueous insecticidal architectural coating composition comprising,
i. a polymer binder comprising emulsion polymer particles having a Tg above ambient temperature
ii. an effective amount of coalescing solvent for the polymer particles
iii. an effective amount of volatile insecticide
wherein the insecticide has a vapour pressure measured at 25°C of at least 0.1mPa and is located in the polymer particles.

2. A coating composition according to claim 1 wherein the Tg of the emulsion polymer particles is at least 30°C.

3. A coating composition according to claim 1 or claim 2 wherein the emulsion polymer particles film form at temperatures from -15 to 50°C.

4. A coating composition according to any one of the preceding claims wherein the emulsion polymer particles are non-croslinked.

5. A coating composition according to any one of the preceding claims wherein the polymer binder comprises at least 60wt% emulsion polymer particles containing the insecticide.

6. A coating composition according to any one of the preceding claims wherein the polymer binder consists of emulsion polymer particles.

7. A coating composition according to any one of the preceding claims wherein the coalescing solvent is dibasic ester.

8. A coating composition according to any one of the preceding claims wherein the coalescing solvent comprises up to 7.5wt% of the liquid coating composition.

9. A coating composition according to any one of the preceding claims wherein the insecticide comprises from 0.1 to 4wt% of the liquid coating composition.

10. A coating composition according to any one of the preceding claims wherein the dibasic esters are methyl esters.

11. A coating composition according to claim 10 wherein the dibasic esters are dimethyl succinate, dimethyl glutarate, dimethyl adipate or mixtures thereof.

12. A process of making the composition of claim 1 comprising the steps of
i. making a solution of volatile insecticide of at least 30wt% by dissolving the insecticide in a dibasic ester solvent
ii. adding a sufficient amount of the solution to provide from 0.1 to 4.0wt% of the insecticide to a paint, calculated on the liquid paint formulation, comprising a polymer binder comprising emulsion polymer particles
iii. stirring the resultant mixture for a sufficient time to allow the pesticide to migrate into the polymer particles
wherein the insecticide has a vapour pressure when measured at 25°C of at least 0.1mPa and the Tg of the emulsion polymer particles is above ambient temperature.

13. A process for coating a surface comprising the steps of
a) providing an aqueous insecticidal architectural coating composition comprising
i) a polymer binder comprising emulsion polymer particles having a Tg above ambient temperature
ii) an effective amount of coalescing solvent for the polymer particles
iii) an effective amount of volatile insecticide having a vapour pressure of at least 0.1mPa when measured at 25°C where said insecticide is located in the polymer particles
b) applying the coating composition to a surface at a temperature below the Tg of the polymer particles
c) allowing the coating composition to dry and form a continuous coating.

14. A process according to claim 13 wherein the surface to be coated is any surface found inside s domestic or commercial building, including a wall, ceiling, floor or door.
